# EUROPÄISCHE PATENTSCHRIFT

(11) **EP 0 994 166 B1**
(45) Veröffentlichungstag und Bekanntmachung des Hinweises auf die Patenterteilung: **21.07.2004**
(21) Anmeldenummer: 99119115.6
(22) Anmeldetag: 04.10.1999
(51) Int. Cl.: C09D 17/00, C09D 5/36, C09D 11/02

(54) **Pigmentpräparation**
Pigment preparation
Préparation pigmentaire

(30) Priorität: 14.10.1998 DE 19847169
(43) Veröffentlichungstag der Anmeldung: 19.04.2000
(73) Patentinhaber: MERCK PATENT GmbH, 64293 Darmstadt (DE)
(72) Erfinder: Herget, Gerhard, Dr., 64372 Ober-Ramstadt (DE); Hechler, Wolfgang, 64686 Lautertal (DE); Griessmann, Carsten, 64846 Gross-Zimmern (DE)

(56) Entgegenhaltungen:
- EP-A- 0 326 865
- US-A- 4 814 020
- US-A- 5 228 912

## Beschreibung

Die Erfindung betrifft eine nichtstaubende, homogene Pigmentpräparation, sowie deren Verwendung in Farben, Lacken, Druckfarben, Kunststoffen und als Vorprodukt für Druckfarben.

In technischen Prozessen werden Pigmente vielfach nicht als trockene Pulver eingesetzt, da diese stauben, was zu erhöhten Anforderungen in Hinblick auf die Arbeitsplatzsicherheit führt. Weiterhin wird bei der Einbringung von Pulvern in Kunststoffe, Basislacksysteme, etc. vielfach eine Agglomeration des Pigmentpulvers beobachtet. Eine homogene Verteilung des Pigments in der jeweiligen Matrix ist nur schwer oder aber gar nicht zu erreichen.

Anstelle des Pigmentpulvers werden nicht staubende Pigmentpräparationen verwendet, wie aus der DE-PS 36 27 329 und DE-OS 41 39 993 bekannt. Hierbei handelt es sich um leicht dispergierbare Perlglanzpigmentpräparationen, wobei ein plättchenförmiges Perglanzpigment mit einem Polymerharz und gegebenenfalls Weichmachern, Lösungsmitteln und Tensiden beschichtet ist. Aus der DE-OS 41 39 993 sind pigmentierte rieselfähige Pulver mit einem geringen Feuchtegehalt bekannt.

Pasten und daraus hergestellte Trockenpräparate, wie z. B. aus der EP 0 803 552 bekannt, sind eine technische Alternative zu den trockenen oder angefeuchteten Pulvern, wenn sie folgende Rahmenbedingungen erfüllen:
- fließfähige Konsistenz
- möglichst geringe Dilatanz bei maximalem Pigmentgehalt

Die Komponenten der Präparation/Paste sollten dabei so gewählt sein, daß die Präparation/Paste möglichst gut auf die anderen Komponenten des jeweiligen Beschichtungssystems abgestimmt ist und sich nach der Einbringung leicht homogen verteilt.

Neben einer guten Kompatibilität mit den weiteren Bestandteilen des Beschichtungssystems müssen Pigmentpräparationen eine hohe Stabilität aufweisen, d.h., sie dürfen nicht zur Phasenseparation neigen. Diese Forderung ist besonders wichtig bei Pigmentpräparationen auf der Basis plättchenförmiger Pigmente, da diese auf Grund ihrer Struktur bei der Phasenseparation zum "Zusammenbacken" neigen und nur schwer wieder aufgerührt werden können. Eine homogene Verteilung des Pigments in der jeweiligen Matrix ist nur schwer oder gar nicht zu erreichen. So weist z. B. eine wäßrige Pigmentpräparation, welche durch Anteigen eines Pulvers aus plättchenförmigen Perlglanzpigmenten mit Wasser erhalten wird, eine unzureichende Stabilität auf.

Beschichtungsmassen, wie z. B. Lacke, Farben, Druckfarben, etc., enthaltend Pigmente auf der Basis plättchenförmiger Substrate sind insofern problematisch in der Handhabung, als die Pigmente infolge ihrer Größe und ihrer Dichte sich leicht absetzen und dann zu einem sehr festen Sedimentkuchen zusammenbacken können. Dieser Kuchen ist in der Regel nur schwer wieder aufrührbar. Dies gilt vor allem bei der Lagerung von Lacken, Farben und Druckfarben, sowie bei der Verarbeitung derselben.

So wurden unter anderem zahlreiche Methoden entwickelt um das Problem der Einarbeitung und Handhabung von plättchenförmigen Pigmenten in Beschichtungsmassen zu lösen.

Aus der DE 36 27 329 und den EP's 0 306 056 und 0 268 918 ist bekannt, daß modifizierte plättchenförmige Substrate mit einer Polymerbeschichtung bzw. nach Behandlung mit Kupplungsreagenzien wie Organotitanaten, Organosilanen in Belegmassen ein verbessertes Absetz- und Aufrührverhalten zeigen.

Weiterhin kann das Wiederaufrühren erleichtert werden, indem den Beschichtungsmassen Additive zugesetzt werden, die entweder eine gezielte Flokkulation (Kartenhauseffekt), ein strukturviskoses und/oder thixotropes Verhalten, eine sterische Abstoßung und/oder eine elektrostatische Abstoßung der Pigmente bewirken.

Additive mit thixotropem Verhalten sind in der EP 0 198 519 und der DE-OS 18 05 693 beschrieben. Aus der DE-OS 39 22 178 ist bekannt, daß man durch Mischen einer Suspension eines plättchenförmigen Substrats mit sphärischen Teilchen, wie z. B. SiO₂, TiO₂ und ZrO₂, deagglomerierte und gut dispergierbare Pigmente erhält.

In der EP 0 523 357 werden Perlglanzpigmente mit Diharnstoffderivaten behandelt, während aus der EP 0 515 928 die Oberflächenmodifizierung von Pigmenten mit Polyacrylaten bekannt ist. Aus der EP 0 650 144 ist die Beschichtung von Perlglanzpigmenten mit SiO₂/Al₂O₃ und SiO₂/ZrO₂ bekannt.

U.S. 5,228,912 beschreibt oberflächenmodifizierte Pigmente, die mit einem Modifiziermittel in Form eines Polyacrylats bzw. Polymethacrylats beschichtet sind. Aus der U.S. 4,814,020 sind Pigmente bekannt, die mit Polyester/Polyurethan-Blockpolymeren und gegebenenfalls einem Weichmacher beschichtet sind.

Die bisher zur Verwendung in wäßrigen und organischen Beschichtungssystemen entwickelten Pigmentpräparationen auf der Basis plättchenförmiger Pigmente genügen den beschriebenen Anforderungen häufig nur unzureichend.

Die Aufgabe der vorliegenden Erfindung bestand daher in der Bereitstellung von Pigmentpräparationen auf der Basis plättchenförmiger Pigmente, welche
- in wäßrigen und organischen Beschichtungssystemen verwendet werden können,
- eine hohe Stabilität aufweisen, und
- durch eine hohe Kompatibilität mit den übrigen Komponenten des Beschichtungssystems gekennzeichnet sind.

Es wurde gefunden, daß diese Aufgabe durch die Bereitstellung der erfindungsgemäßen Pigmentpräparation gelöst werden kann.

Gegenstand der Erfindung ist somit eine nichtstaubende, homogene Pigmentpräparation, die
- mindestens 50 Gew.-% eines oder mehrerer Effektpigmente,
- 0,1 - 50 Gew.-%eines Gemisches aus Weichmacher/Nitrcellulose wobei das Verhältnis Weichmacher/Nitrocellulose 1:1 bis 1:9 beträgt, und
- 0 - 49,9 Gew.-% eines Lösemittels oder Lösemittelgemisches
enthält.

Gegenstand der Erfindung ist auch ein Verfahren zur Herstellung der Pigmentpräparation, dadurch gekennzeichnet, daß man in einem Mischgefäß das Effektpigment mit dem Weichmacher bzw. Weichmacher/Nitrocellulose-Gemisch und gegebenenfalls mit dem Lösemittel bzw. Lösemittelgemisches trocken mischt.

Überraschend ist auch die Beobachtung, daß die Pigmentpräparation in ihren optischen Eigenschaften nicht nachhaltig beeinflußt wird. Die Einsatzkonzentration des Weichmachers bzw. Weichmacher/Nitrocellulose-Gemisches beträgt 0,1 - 50 Gew.-%, vorzugsweise liegt sie jedoch bei 0,5 - 20 Gew.-%, insbesondere bei 0,2 - 5 Gew.-%, bezogen auf das Pigment. Das Verhältnis Weichmacher/Nitrocellulose ist variabel, beträgt aber vorzugsweise 1:1 bis 1:9.

Die erfindungsgemäße Pigmentpräparation zeichnet sich weiterhin durch eine gute Kompatibilität mit den übrigen Komponenten von Beschichtungssystemen, sowie ihre gute Verarbeitbarkeit, die hohe Staubfreiheit und Stabilität aus. Bei der Einarbeitbarkeit der Pigmentpräparation in Formulierungen ist ein verzögertes Absetzverhalten und ein verbessertes Wiederaufrührverhalten eines aufgetretenen Bodensatzes zu beobachten. Weiterhin ist die Pigmentpräparation in Abhängigkeit vom Feuchtegehalt eine fließfähige Paste bzw. ein angefeuchtetes rieselfähiges Pulver, das sehr gut zur Herstellung von Trockenpräparaten, wie z. B. Pellets, Granulate, Briketts, etc., geeignet ist. Die aus der erfindungsgemäßen Pigmentzubereitung hergestellten Trockenpräparate sind ebenfalls Gegenstand der Erfindung.

Wesentlicher Bestandteil der Präparation sind Pigmente. Als Effektpigmente werden vorzugsweise Interferenzpigmente auf der Basis plättchenförmiger, transparenter oder semitransparenter Substrate aus z.B. Schichtsilikaten, wie etwa natürlicher oder synthetischer Glimmer, Talkum, Kaolin, aus Glas oder anderen silikatischen Materialien verwendet, welche mit einer oder mehreren Schichten aus mindestens einem Metalloxid bzw. -oxidhydrate, überzogen sind. Dabei enthält zumindest eine dieser Schichten vorzugsweise ein oder mehrere hochbrechende Metalloxide bzw.- oxidhydrate, welche aus der folgenden Gruppe ausgewählt sind: Titandioxid, Titansuboxid, Zinnoxid, Zirkonoxid, Zirkondioxid, Zinkoxid, Eisenoxid (Fe₂O₃, Fe₃O₄), Chromoxid, Nickeloxid, Cobaltoxid bzw. die entsprechenden Oxidhydrate.

Weiterhin können auch plättchenförmige Metalloxide wie z. B. plättchenförmiges Eisenoxid, Aluminiumoxid, Titandioxid, Siliziumdioxid, LCP's (Liquid Crystal Polymers), holographische Pigmente oder Wismutoxychlorid in den erfindungsgemäßen Pigmentzubereitungen eingesetzt werden.

Als plättchenförmige Pigmente können auch Metallplättchen benutzt werden, die unbeschichtet oder auch mit einer oder mehreren Metalloxidschichten bedeckt sein können; bevorzugt sind z. B. Al-, Cr-, Fe-, Au-, Ag- und Stahlplättchen. Sollten korrosionsanfällige Metallplättchen wie z. B. Al-, Fe- oder Stahlplättchen unbeschichtet eingesetzt werden, werden sie vorzugsweise mit einer schützenden Polymerschicht überzogen.

Diese plättchenförmigen Pigmente sind bekannt und sind größtenteils kommerziell erhältlich und/oder können nach dem Fachmann bekannten Standardverfahren hergestellt werden. Interferenzpigmente auf der Basis transparenter oder semitransparenter plättchenförmiger Substrate (Perlglanzpigmente) sind z. B. beschrieben in den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und 38 42 330.

Besonders bevorzugte Pigmentpräparationen enthalten mit TiO₂/Fe₂O₃ beschichtete Glimmer- oder SiO₂-Plättchen. Die Beschichtung der SiO₂-Plättchen kann z. B. erfolgen wie in der WO 93/08237 (naßchemische Beschichtung) oder DE-OS 196 14 637 (CVD-Verfahren) beschrieben.

Die erfindungsgemäße Pigmentpräparation kann ein oder mehrere Effektpigmente enthalten; vielfach können durch die Verwendung von mindestens zwei verschiedenen Pigmenten besondere Effekte erzielt werden. Der Massenanteil der plättchenförmigen Pigmente an der erfindungsgemäßen Pigmentpräparation beträgt nicht weniger als 50 Gew.-% und insbesondere mindestens 60 Gew.-%; besonders bevorzugt sind erfindungsgemäße Pigmentzubereitungen mit einem Pigmentgehalt von mehr als 80 Gew.-%.

Als weitere Komponente muß die erfindungsgemäße Pigmentpräparation ein oder mehrere Weichmacher enthalten, wobei es sich in der Regel um hochsiedende, schwerflüchtige Flüssigkeiten handelt, die sehr gut mit dem Bindemittel verträglich sind. Der Weichmacher besteht vorzugsweise aus einer oder mehreren Verbindungen, welche vorzugsweise ausgewählt werden aus der folgende Verbindungen umfassenden Gruppe: Phthalate, Trimellitate, Adipate, acyclische und aliphatische Dicarbonsäureester, Polyester, Phosphate, Fettsäurester, Hydroxycarbonsäureester, Epoxidderivate, wie sie z.B. in Casten Lackrohstofftabellen 9. Auflage 1992, beschrieben sind.

Bei den Weichmachern handelt es sich vorzugsweise um Hydroxycarbonsäureester, wie z. B. Zitronensäureester, Weinsäureester, Acetyltrimethylcitrat, Acetyltriethylcitrat, oder Phthalsäureester mit linearen, verzweigten oder zyklischen Alkoholen mit bis zu 12 C-Atomen, Ester der Adipin-, Sebazin- oder Azelainsäure, Fettsäurester, sowie andere handelsübliche Weichmacher, die z. B. in Kirk-Othmer, Vol. 15, S. 720 - 789 beschrieben sind. Vorzugsweise werden insbesondere im Bereich der Druckindustrie folgende Weichmacher in Verbindung mit Nitrocellulose eingesetzt: Phthalate, Phosphatester, Citrate, Butyrate und Epoxidderivate. In den Mischungen mit Nitrocellulose (NC) werden bevorzugt solche NC eingesetzt, die einen Stickstoffgehalt von 10,9 - 12,3 % besitzen, bzw. eine gute Löslichkeit in Alkoholen aufweisen. Unter dem Begriff Nitrocellulose sind ebenfalls alle dem Fachmann bekannten Nitrocellulosederivate zu subsumieren, insbesondere solche, die üblicherweise in Druckfarben eingesetzt werden. Es werden weiterhin vorzugsweise solche NC bevorzugt, die im Bereich des Tief- bzw. Flexodrucks eingesetzt werden (niederviskose Typen).

Der Gewichtsanteil des Weichmacher/Nitrocellulose-Gemisches an der erfindungsgemäßen Pigmentpräparation beträgt 0,1 bis 50 Gew.-%, vorzugsweise 5 bis 30 Gew.-% und insbesondere 10 bis 25 Gew.-%.

Die Herstellung der erfindungsgemäßen Pigmentpräparation erfolgt einfach dadurch, daß zu dem bzw. den Effektpigmenten der Weichmacher und die Nitrocellulose, das Lösemittel und gegebenenfalls weitere Additive, gleichzeitig oder nacheinander hinzugegeben werden. Dabei hat es sich als vorteilhaft herausgestellt, daß der Weichmacher, die Nitrocellulose, sowie das Lösemittel nicht auf einmal, sondern unter Rühren kontinuierlich hinzugegeben werden. Diese Mischung wird in einem Mischgerät, z. B. einem Taumel-, Flügelrad-, Schaufel- oder Fluidmischer, wobei auf Grund der relativ hohen Bruchanfälligkeit der Effektpigmente langsam laufende Mischer bevorzugt werden, schonend homogenisiert. Die Mischer sind nicht kritisch, aber insbesondere kommen Dispermaten, Granuliermischer und Schaufelmischer in Frage.

Der erfindungsgemäßen Pigmentzubereitung können während oder nach der Herstellung weitere übliche Additive zugesetzt werden, wie z. B. pH-Regler, Entschäumer, Netzmittel, Antiabsetzmittel, Verlaufsmittel, Sikkative oder Thixotropiermittel. Es handelt sich hierbei um in der Lackindustrie übliche Hilfsstoffe, die in der erfindungsgemäßen Pigmentpräparation in einer Menge von 0 bis 10 Gew.-% enthalten sein können.

Die erfindungsgemäßen Pigmentpräparationen zeichnen sich
- durch eine gute Kompatibilität mit den übrigen Komponenten wäßriger oder organischen Beschichtungssysteme,
- durch hohe Staubfreiheit,
- durch eine hohe Stabilität,
- durch eine gute Verarbeitbarkeit, und
- durch keine oder nur sehr geringe Keimbildungsneigung aus
und sie sind somit herkömmlichen Pigmentzubereitungen deutlich überlegen.

Die erfindungsgemäßen Pigmentpräparationen können für vielfältige Anwendungen verwendet werden. Bevorzugt werden sie in organischen Beschichtungssystemen aus den Bereichen Druck, insbesondere Flexo-, Tief-, Offset- und Siebdruck sowie im Lack und Kunststoff eingesetzt. Besonders bevorzugt werden die Pigmentpräparationen zur Herstellung von Trockenpräparaten, wie z. B. Pellets, Granulate, Briketts, insbesondere als Vorprodukte für Druckfarben, verwendet.

Zur Herstellung der Trockenpräparate wird die Pigmentpräparation bis zu 100 Gew.-% mit einem organischen Lösemittel oder einem Lösemittelgemisch angeteigt. Die fließfähige Pigmentpräparation ist dann sehr gut geeignet für die Befüllung von Tuben sowie zum Strangpressen. Zur Herstellung von Trockenpräparaten wird die erfindungsgemäße Pigmentpräparation stranggepreßt oder auf anderen dem Fachmann bekannten Wegen in eine kompakte Teilchenform verdichtet, z. B. durch Tablettieren, Brikettieren, Pelletieren, Granulieren, Sprühgranulieren oder Extrudieren, und gegebenenfalls anschließend getrocknet.

Die genannten Verfahren sind dem Fachmann bekannt und sind beschrieben in "Size Enlargement by Agglomeration", Wolfgang Pietsch, John Wiley & Sons, Chichester, New York, Brisbane, Toronto, Singapore 1991.

Bei einem Pressen der Pigmentpräparation bzw. der Paste durch eine Lochplatte, das entweder chargenweise mittels Kolben oder kontinuierlich durch einen Extruder erfolgt, entstehen Teilchen in Würstchenform. Durch die entsprechende Einstellung der Viskosität der Präparation kann dafür gesorgt werden, daß die Länge der Teilchen sich durch Abbrechen oder Abreißen beim Austreten aus der Lochplatte selbsttätig reguliert. Das Abtrennen der aus der Lochplatte austretenden Pastenstränge zu Teilchen kann jedoch auch in bekannter Weise durch mechanische Einwirkung, z. B. durch umlaufende Trennmesser, erfolgen. Das Pelletieren oder Granulieren erfolgt in bekannter Weise auf Pelletiertellern oder in Granulierbehältern und führt in der Regel zu kugelförmigen Präparationsteilchen.

Die Herstellung von Pigmentgranulaten über Teller bzw. Trommeln kann von Fall zu Fall von Vorteil sein um nur ein Minimum an Hilfslösemittel bzw. Wasser zu verwenden. Die hierfür als Ausgangsstoff verwendeten Pigmentpräparationen sind in der Regel angefeuchtete Pulver, die teilweise auch bereits granuliert vorliegen können und mit dem weiteren Verfahrensschritt lediglich in die gewünschte definierte Teilchen gebracht werden.

Die zunächst im Wege des Pressens durch eine Lochplatte hergestellten Teilchen können zusätzlich anschließend im Wege des Pelletierens oder Granulierens nachgeformt werden. Ein Tablettieren oder Brikettieren erfolgt durch Pressen der Paste in entsprechenden Formen.

Der Trocknungsprozeß, der durch das Kompaktieren hergestellten Teilchen, findet in der Regel bei Temperaturen von 20 °C bis 150 °C statt und dauert zwischen 0,5 und 4 h und kann ggf. unter reduziertem Druck erfolgen. Zuletzt wird das Trockenpräparat gegebenenfalls klassiert oder zerkleinert. Die so erhaltenen Granulate beispielsweise sind ebenfalls nichtstaubend und besitzen Teilchengrößen im Bereich von 0,1-80 mm, vorzugsweise 0,1-20 mm, insbesondere 0,1-2 mm. Die Lagerung und der Transport der Trockenpräparate sind weniger eingeschränkt und daher sehr unproblematisch. Die Trockenpräparate besitzen den weiteren Vorteil, daß sie mit wenig oder keiner Flüssigkeit beladen sind und damit eine erhöhte Stabilität besitzen.

Die Trockenpräparation kann auch unter Ausschluß von Wasser und/oder Lösemitteln hergestellt werden, indem die Harze und weitere Komponenten mit dem Pigment unter Temperatureinwirkung zu einer fließfähigen bzw. rieselfähigen Schmelze verarbeitet werden und daraus durch Abtropfen, Schleudern oder den Einsatz in Granuliertellem oder Trommeln, Granulate hergestellt werden.

Dem Pigmentgranulat können auch Stoffe zugesetzt sein, die das Zerfallen und Lösen der Pigmentgranulate beschleunigen bzw. unterstützen, z. B. sperrige sphärische Partikel, wie Hohlkugeln, Halbkugeln oder solche Stoffe, die sich sehr schnell im Anwendungsmedium auflösen, bzw. quellen und so die Granulate "sprengen".

Die Pigmentpräparation und daraus hergestellte Trockenpräparate können in alle bekannten Anwendungsmedien eingearbeitet werden, insbesondere in Lacken, Farben und Druckfarben.

Gegenstand der Erfindung sind ebenfalls Anwendungsmedien enthaltend Trockenpräparate hergestellt aus der erfindungsgemäßen Pigmentpräparation.

Die erfindungsgemäßen Pigmentzubereitungen und Trockenpräparate sind mit einer Vielzahl von Farbsystemen kompatibel vorzugsweise aus dem Bereich der Lacke, Kunststoffe, Farben und Druckfarben. Gegenstand der Erfindung ist somit auch die Verwendung der Pigmentpräparation und der daraus hergestellten Trockenpräparate in Farben, Druckfarben, Lacken und Kunststoffen.

Der erfindungsgemäßen Pigmentpräparation kommt somit eine erhebliche wirtschaftliche Bedeutung zu.

Die nachfolgenden Beispiele sollen die Erfindung erläutern, ohne sie zu begrenzen.

### Beispiele

### Beispiel 1

An einem Mischgranulator R02 (Fa. Eirich) werden 800 g Iriodin® 123 vorgelegt und mit 40 g Zitronensäuretriethylester und mit einer Lösung von 200 g Nitrocellulosechips VP-N-4320 (AM330, plastifiziert mit Octyldiphenylphosphat, Fa. Wolf Walsrode) in 500 g Ethanol versetzt. Das Gemisch wird anschließend bis zur Homogenität gemischt. Das angefeuchtete Granulat wird in einem rotierenden Teller TR04 (Fa. Eirich) unter Zusatz von weiterem Ethanol nach Bedarf granuliert und kontinuierlich ausgetragen. Das erhaltene konditionierte feuchte Granulat wird im Vakuumschrank getrocknet und anschließend mittels Sieben von der Grobfraktion befreit. Das abgesiebte Material (5%) kann für neue Granulierversuche wieder eingesetzt werden. Die Hauptfraktion (95%) wird auf Festigkeit (Druckfestigkeit) sowie Auflösegeschwindigkeit in einem kommerziell erhältlichen Nitrocellulosebindemittel GS 95 MB 011TW (Gebrüder Schmidt Druckfarben) mit guten Eigenschaften geprüft. Mit der Druckfarbe werden Flexoandrucke erzeugt (F1, Fa. IGT), die einen sehr guten Glanzeffekt sowie Gleichmäßigkeit des Ausdruckes zeigen.

## Patentansprüche

1. Nichtstaubende homogene Pigmentpräparation, **dadurch gekennzeichnet, dass** sie
- mindestens 50 Gew.-% eines oder mehrerer Effektpigmente,
- 0,1 - 50 Gew.-%eines Gemisches aus Weichmacher/Nitrcellulose wobei das Verhältnis Weichmacher/Nitrocellulose 1:1 bis 1:9 beträgt, und
- 0 - 49,9 Gew.-% eines Lösemittels oder Lösemittelgemisches
enthält.

2. Pigmentpräparation nach Anspruch 1, **dadurch gekennzeichnet, dass** das Effektpigment ein Interferenzpigment auf Basis plättchenförmiger, transparenter oder semitransparenter Substrate ist.

3. Pigmentpräparation nach Anspruch 2, **dadurch gekennzeichnet, dass** das Substrat ein Schichtsilikat, Talkum, Kaolin oder Glas ist, welches mit einer oder mehreren Schichten aus mindestens einem Metalloxid bzw. -oxidhydrat überzogen ist.

4. Pigmentpräparation nach Anspruch 1, **dadurch gekennzeichnet, dass** das Effektpigment ein Perlglanzpigment oder mit ein oder mehreren Metalloxiden beschichtete Al₂O₃-, SiO₂-, TiO₂-Plättchen sind.

5. Pigmentpräparation nach einem der Ansprüche 1 bis 4, **dadurch gekennzeichnet, dass** der Weichmacher ein Hydroxycarbonsäureester ist.

6. Pigmentpräparation nach einem der Ansprüche 1 bis 5, **dadurch gekennzeichnet, dass** das Lösemittel ein Alkohol ist.

7. Verfahren zur Herstellung einer Zubereitung nach einem der Ansprüche 1 bis 6, **dadurch gekennzeichnet, dass** zu dem Effektpigment, gleichzeitig oder nacheinander, der Weichmacher, die Nitrocellulose und ein Lösemittel zugegeben werden, und dass die Mischung in einem Pulvermischgerät schonend homogenisiert wird.

8. Verwendung der Pigmentpräparation nach Anspruch 1 in einem Iösemittelhaltigen Beschichtungssystem.

9. Verwendung der Pigmentpräparation nach einem der Ansprüche 1 bis 6 in Druckfarben, insbesondere im Tief-, Sieb-, Flexo- und Offset-Druck, in Kunststoffen und Lacken.

10. Verwendung der Pigmentpräparation nach Anspruch 1 zur Herstellung von Trockenpräparaten wie Granulate, Briketts, Tabletten und Pellets.

## Claims

1. Non-dusting homogeneous pigment preparation, **characterised in that** it comprises
- at least 50% by weight of one or more effect pigments,
- 0.1 - 50% by weight of a mixture of plasticiser/nitrocellulose, where the plasticiser/nitrocellulose ratio is 1:1 to 1:9, and
- 0 - 49.9% by weight of a solvent or solvent mixture.

2. Pigment preparation according to Claim 1, **characterised in that** the effect pigment is an interference pigment based on flake-form, transparent or semi-transparent substrates.

3. Pigment preparation according to Claim 2, **characterised in that** the substrate is a phyllosilicate, talc, kaolin or glass which is coated with one or more layers of at least one metal oxide or oxide hydrate.

4. Pigment preparation according to Claim **1, characterised in that** the effect pigment is a pearlescent pigment, or Al₂O₃, SiO₂, TiO₂ flakes coated with one or more metal oxides.

5. Pigment preparation according to one of Claims 1 to 4, **characterised in that** the plasticiser is a hydroxycarboxylic acid ester.

6. Pigment preparation according to one of Claims 1 to 5, **characterised in that** the solvent is an alcohol.

7. Process for the preparation of a preparation according to one of Claims 1 to 6, **characterised in that** the plasticiser, the nitrocellulose and a solvent are added simultaneously or successively to the effect pigment, and **in that** the mixture is homogenised under gentle conditions in a powder mixer.

8. Use of the pigment preparation according to Claim 1 in a solvent-containing coating system.

9. Use of the pigment preparation according to one of Claims 1 to 6 in printing inks, in particular in gravure, screen, flexographic and offset printing, in plastics and surface coatings.

10. Use of the pigment preparation according to Claim 1 for the preparation of dry preparations, such as granules, briquettes, tablets and pellets.

## Revendications

1. Préparation de pigment homogène sans formation particulaire, **caractérisée en ce qu'**elle comprend
- au moins 50% en poids d'un ou de plusieurs pigments d'effet,
- 0,1 - 50% en poids d'un mélange de plastifiant/nitrocellulose, dans lequel le rapport plastifiant/nitrocellulose est de 1:1 à 1:9, et
- 0 - 49,9% en poids d'un solvant ou d'un mélange de solvants.

2. Préparation de pigment selon la revendication 1, **caractérisée en ce que** le pigment d'effet est un pigment d'interférence basé sur des substrats transparents ou semi-transparents sous forme de flocons.

3. Préparation de pigment selon la revendication 2, **caractérisée en ce que** le substrat est un phyllosilicate, du talc, du kaolin ou du verre qui est revêtu d'une ou de plusieurs couches d'au moins un oxyde métallique ou un hydrate d'oxyde.

4. Préparation de pigment selon la revendication 1, **caractérisée en ce que** le pigment d'effet est un pigment perlé ou des flocons de Al₂O₃, SiO₂ ou TiO₂ revêtus d'un ou de plusieurs oxydes métalliques.

5. Préparation de pigment selon l'une des revendications 1 à 4, **caractérisée en ce que** le plastifiant est un ester d'acide hydroxycarboxylique.

6. Préparation de pigment selon l'une des revendications 1 à 5, **caractérisée en ce que** le solvant est un alcool.

7. Procédé pour la préparation d'une préparation selon l'une des revendications 1 à 6, **caractérisé en ce que** le plastifiant, la nitrocellulose et un solvant sont ajoutés simultanément ou successivement au pigment d'effet, et **en ce que** le mélange est homogénéisé sous des conditions légères dans un mélangeur à poudre.

8. Utilisation de la préparation de pigment selon la revendication 1 dans un système de revêtement contenant un solvant.

9. Utilisation de la préparation de pigment selon l'une des revendications 1 à 6 dans des encres d'impression, en particulier dans une impression par gravure, sérigraphie, flexographie et offset, dans des matières plastiques et dans des revêtements de surface.

10. Utilisation de la préparation de pigment selon la revendication 1 pour la préparation de préparations sèches telles que des granulés, des briquettes, des tablettes et des pastilles.
